# EUROPEAN PATENT SPECIFICATION

(11) **EP 1 693 598 B1**
(45) Date of publication and mention of the grant of the patent: **30.05.2007**
(21) Application number: 05425088.1
(22) Date of filing: 21.02.2005
(51) Int. Cl.: F16H 1/46, F16D 1/10

(54) **Elastic transmission bush for reduction gears**
Elastische Kupplungsbuchse für Reduktionsgetriebe
Manchon de transmission élastique pour réducteur de vitesse

(43) Date of publication of application: 23.08.2006
(73) Proprietor: Tecnoingranaggi Riduttori S.r.l. con Unico Socio, 40017 San Giovanni in Persiceto (IT)
(72) Inventor: Matteuzzi, Alessandro, 40050 Castello d'Argile (IT)
(74) Representative: Franzolin, Luigi

(56) References cited:
- EP-A- 1 167 817
- DE-A1- 10 334 929
- US-A- 1 479 583
- US-A- 4 943 182
- US-A- 4 973 188

## Description

The present invention relates to an elastic transmission bush for reduction gears.

A coupling device to couple two shafts is described in US-1 479 583 (CAREY). The coupling device described in such a document is a bayonet-type one.

As explained in the description from opposite sides of a plug a pair of pins protrude, which in actual use engage a relevant pair of slots in a socket. In this case the rigidity of the socket body plays a very important role. In fact, if the socket body were flexible (namely not rigid) any axial force tending to detach such a bush from the plug would achieve an unwished disengagement of pins from the slots. Thus, the coupling device described in US-1 479 583 (CAREY) is not suitable for coupling a reduction gear to a transmission shaft. Another coupling device for reduction gears is known from the document EP 1167817.

Moreover, in reduction gears, an elastic bush is used to connect the reduction gear mechanically to a transmission shaft.

The bush is tightened onto the transmission shaft by a clamp in the form of a radially cut ring. Astride (and perpendicular to) the radial cut, there are two aligned, threaded through holes in which a bolt is screwed in use.

For example, one known embodiment employs a bush with a T-shaped through slot.

More specifically, the T-shaped through slot comprises a first portion parallel to the longitudinal axis of symmetry of the bush, and a circumferential (arc-shaped) second portion substantially perpendicular to the first portion.

Research and testing have shown bushes of this sort to be unreliable, by differing in unbalance according to how the clamp is fitted with respect to the bush.

That is, comprising through holes and a bolt, the clamp in itself is intrinsically unbalanced, and the degree of unbalance of the bush-clamp system depends on the relative angular position of the two members (bush and clamp).

In other words, by rotating the clamp with respect to the bush, a relative position between the two is established in which there is a minimum of unbalance, but which normally translates into increased vibration and wear of the system.

The T-slotted bush described above also has the drawback of having an unbalanced resisting section concentrated entirely on one side of the bush.

The above drawbacks are further compounded in the case of a precision reduction gear, and in particular a precision epicyclic reduction gear.

Demand therefore exists for a bush, and more generally speaking a bush/clamp system, which provides for a minimum, equal amount of unbalance, regardless of the angular position of the clamp with respect to the bush.

It is therefore a main object of the present invention to provide an elastic transmission bush for reduction gears, designed to eliminate the aforementioned drawbacks.

It is a further object of the present invention to provide an improved bush/clamp system.

According to the present invention, there is provided an elastic transmission bush for reduction gears, as claimed in Claim 1.

The elastic bush according to the present invention is particularly advantageous for precision reduction gears, in particular precision epicyclic reduction gears used in fields such as robot engineering.

A non-limiting embodiment of the present invention will be described by way of example with reference to the accompanying drawings, in which:
Figure 1 shows a section of a precision epicyclic reduction gear featuring an elastic transmission bush which is the main object of the present invention;
Figure 2 shows an isometric view of an elastic transmission bush in accordance with the invention;
Figure 3 shows a side view of the Figure 2 elastic bush.

For a clear understanding of the present invention, a brief description will be given of a known precision epicyclic reduction gear comprising an innovative elastic bush.

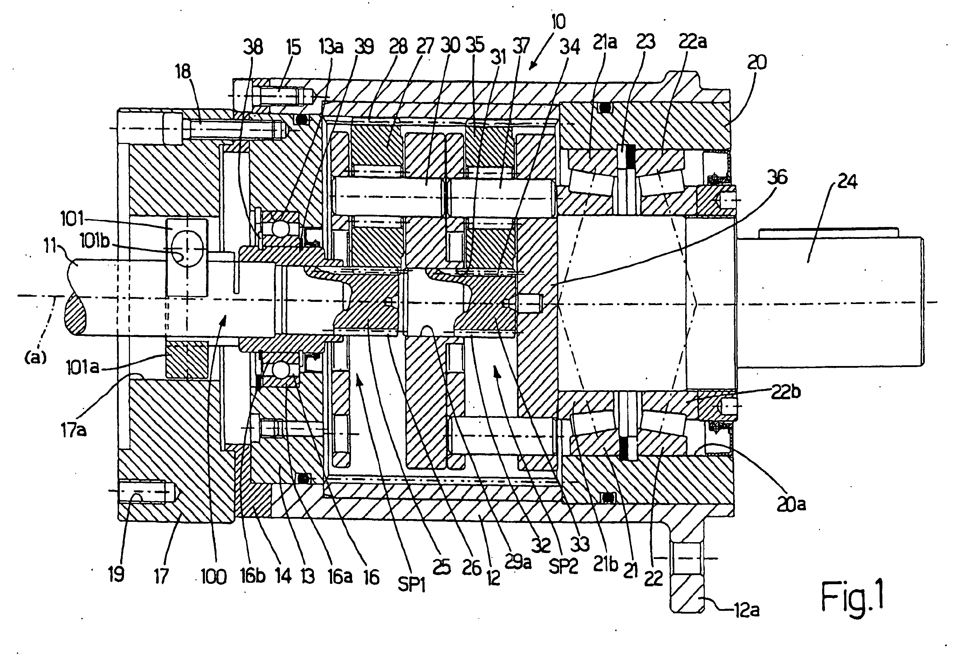

Number 10 in Figure 1 indicates a known epicyclic reduction gear comprising an elastic transmission bush 100 in accordance with the present invention.

Motion is transmitted to epicyclic reduction gear 10 by a transmission shaft 11 connected mechanically to a motor (not shown).

Transmission shaft 11 has a longitudinal axis of symmetry (a), which is also the longitudinal axis of symmetry of reduction gear 10.

In known manner, epicyclic reduction gear 10 comprises a substantially tubular, flanged outer casing 12.

Outer casing 12 comprises a flange 12a, which is fixed by known means (not shown) to a support (not shown).

Outer casing 12 is closed at a first end by a substantially annular member 13 retained inside outer casing 12 by a flange 14 screwed to casing 12 by a number of screws 15 (only one shown in Figure 1).

As shown in Figure 1, member 13 has a central hole 13a for housing a bearing 16.

The outer cage 16a of bearing 16 is fixed by known means to the wall of central hole 13a, while the inner cage 16b of bearing 16 is made integral (by known means) with elastic transmission bush 100.

On the side facing elastic bush 100, reduction gear 10 is closed by a cover 17 screwed by a number of screws 18 to flange 14 and to member 13.

Cover 17 has a number of threaded holes 19 (only one shown in Figure 1) by which to assemble the motor (not shown).

As shown in Figure 1, cover 17 has a central hole 17a housing an end portion of transmission shaft 11, elastic bush 100, and a clamp 101, which, as will be seen, provides for tightening elastic bush 100 onto transmission shaft 11.

On the opposite side to cover 17, an annular member 20 is fixed inside outer casing 12.

Member 20 has a central hole 20a housing two bearings 21, 22 separated by spacers 23.

As in known methods, the outer cages 21a, 22a of bearings 21, 22 are fixed to the wall of hole 20a, while the inner cages 21b, 22b are integral with an output shaft 24 connected mechanically to an end user device (not shown).

Precision epicyclic reduction gear 10 between members 13 and 20 comprises two reduction stages SP1, SP2 (see below).

Elastic transmission bush 100 is integral (in known manner) with a shaft 25 supporting a sun gear 26 of the first reduction stage SP1.

Sun gear 26 meshes with a number of planet gears 27 (only one shown in Figure 1) which, in turn, mesh with a fixed ring gear 28 on the inner wall of casing 12.

Each planet gear 27 is connected mechanically to a planet carrier 29 by means of a relative pin 30.

In short, the first reduction stage SP1 comprises sun gear 26, planet gears 27, fixed ring gear 28, planet carrier 29, and pins 30.

Planet carrier 29 has a through hole 29a having teeth 31 which mesh with a spline 32 on a shaft 33.

Shafts 25 and 33 have the same longitudinal axis of symmetry (a).

Shaft 33 also comprises a sun gear 34 of the second reduction stage SP2.

Sun gear 34 meshes with a number of planet gears 35 (only one shown in Figure 1), which mesh simultaneously with fixed ring gear 28.

Bach planet gear 35 is connected mechanically to a planet carrier 36 by means of a relative pin 37.

In short, the second reduction stage SP2 comprises sun gear 34, planet gears 35, fixed ring gear 28, planet carrier 36, and pins 37.

Sun gear 36 is integral with output shaft 24 by means of known means.

The speed of transmission shaft 11 has therefore undergone two reductions at the two reduction stages SP1, SP2.

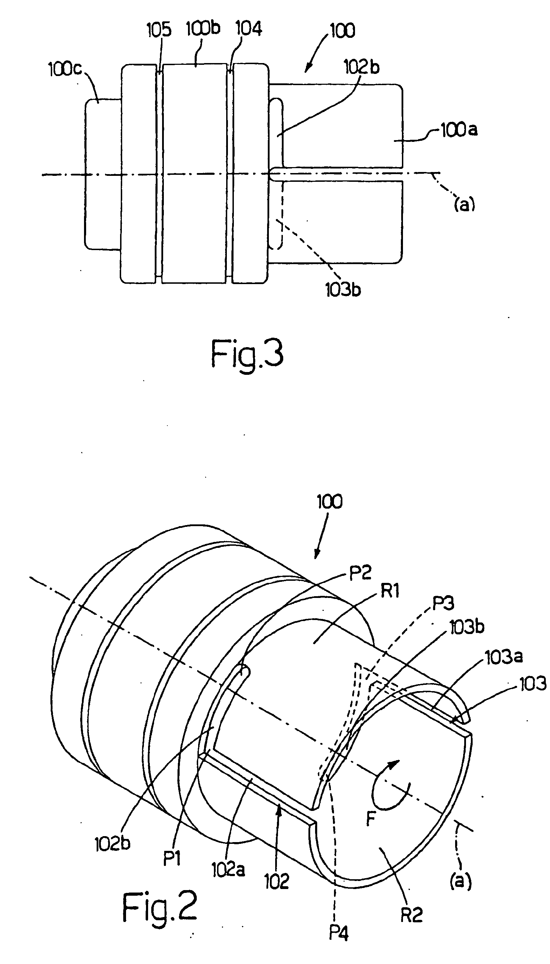

The elastic bush 100, which is the main object of the present invention, is shown in more detail in Figures 2 and 3.

Bush 100 is substantially cylindrical. More specifically, bush 100 comprises three cylindrical portions 100a, 100b, 100c formed in one piece and in series with one another.

As shown in Figures 2 and 3, elastic portion 100a has two through slots 102, 103 permitting deformation of portion 100a to grip transmission shaft 11 as required (see below).

Slot 102 comprises a straight first portion 102a parallel to axis (a) and in series with an arc-shaped second portion 102b. Both portions 102a, 102b together combine to form a substantially L shape.

Similarly, slot 103 comprises a straight first portion 103a parallel to axis (a) and in series with an arc-shaped second portion 103b. Both portions 103a, 103b together combine to form a substantially L-shaped slot 103.

As shown in Figures 2 and 3, both through slots 102, 103 are balanced and symmetrical with respect to axis (a).

That is, whereas portions 102a, 103a are diametrically opposite on portion 100a, portions 102b, 103b are respective ideal continuations of portions 102a, 103a in the direction of clockwise arrow F (Figure 3), so that the material of portion 100a is balanced perfectly.

More specifically, portion 102b comprises a start point P1 and an end point P2 of portion 102b in the direction of clockwise arrow F. In other words, point P1 is the end point of portion 102a, and the start point of portion 102b.

Similarly, portion 103b comprises a start point P3 and an end point P4 of portion 103b in the direction of clockwise arrow F.

A first resisting region R1 is located between point P2 of portion 102b and point P3 of portion 103b, and, similarly, a second resisting region R2 is located between point P1 and point P4.

Both resisting regions R1 and R2 are symmetrical with respect to axis (a).

Portion 100b in Figures 2 and 3 is larger in diameter than portion 100a, and the outer surface of portion 100b has two grooves 104, 105, each for housing a respective retaining ring 38, 39 for retaining inner cage 16b of bearing 16 (see also Figure 1).

Portion 100c is a continuation of portions 100a, 100b, and may house means for assembly to shaft 25 (e.g. teeth which engage a spline on the outer surface of shaft 25).

Portion 100a is therefore the section of bush 100 in which the elasticity of the material (e.g. steel) from which it is made is used.

To use portion 100a, in the Figure 1 embodiment, to grip transmission shaft 11, clamp 101 is used.

Clamp 101 generally comprises a radially cut ring 101a (the cut not shown in the drawings), which, astride the cut (not shown), comprises two threaded through holes 101b, one being the ideal continuation of the other.

Holes 101b are fitted through with a bolt (not shown) which is screwed or unscrewed to tighten or release elastic portion 100a about transmission shaft 11.

To screw or unscrew the bolt, a hole (not shown) is provided on cover 17 for insertion by the user of an Allen wrench (not shown).

In short, tightening clamp 101 also tightens portion 100a of bush 100 about the end of transmission shaft 11. Since elastic bush 100 is in turn fixed to shaft 25, motion is transmitted from transmission shaft (input shaft) 11 to output shaft 24 via the two reduction stages SP1 and SP2 of epicyclic reduction gear 10.

Clamp 101 may be made of light metal (e.g. aluminium or aluminium alloy) or steel. The bolt (not shown) for tightening clamp 101 to bush 100 may advantageously be made of titanium to reduce the weight of the structure while still ensuring mechanical strength.

Though elastic bush 100 is shown applied to a precision epicyclic reduction gear 10, to anyone skilled in the art, it will be clear that elastic bush 100 may be used in any type of reduction gear.

The advantages of the elastic bush according to the present invention are as follows:
- barycentric twist centre of the bush (lies exactly along axis (a));
- for a given mass, stress is reduced as compared with known bushes of this type;
- even imperfectly balanced clamps, i.e. with no balance holes, can be used;
- the clamp can be fitted in any position with respect to the bush without impairing balance of the bush/clamp system.

## Claims

1. A bush/clamp system, comprising:
(A) a bush (100) which, in its turn, comprises:
- a first elastic portion (100a) having at least one through slot (102. 103), each being substantially L-shaped;
- a second portion (100b) which is a continuation of said first elastic portion (100a) and which is larger in diameter than said first elastic portion (100a), and the outer surface of said second portion (100b) having two grooves (104, 105), each for housing a respective retaining ring (38, 39) for retaining inner cage (16b) of bearing (16);
- a third portion (100c) which is a continuation of said second portion (100b) and houses means for assembly to a first shaft (25);
and
(B) a clamp (101) to tighten by deformation said first elastic portion (100a) about the end of a second shaft (11).

2. A bush/clamp system (100) as claimed in Claim 1, **characterized in that** each slot (102, 103) comprises a respective straight first portion (102a, 103a) parallel to a longitudinal axis (a) of symmetry of the elastic bush (100), said respective first portion (102a, 103a) being in series with a respective arc-shaped second portion (102b, 103b).

3. A bush/clamp system (100) as claimed in Claim 2, **characterized in that** the two slots (102, 103) are balanced and symmetrical with respect to said axis (a).

4. A bush/clamp system (100) as claimed in Claim 3, **characterized in that** said two portions (102b, 103b) are diametrically opposite, and **in that** said two portions (102b, 103b) are respective ideal continuations of said two portions (102a, 103a) in a clockwise direction (F), so as to perfectly balance the material.

5. A precision reduction gear (10), **characterized by** comprising at least one bush/clamp system as claimed in any one of Claims 1 to 4.

6. A reduction gear (10) as claimed in Claim 5, **characterized by** being an epicyclic reduction gear.

## Patentansprüche

1. Buchsen/Klemmen-System, mit:
(A) einer Buchse (100), die ihrerseits umfasst:
- einen ersten elastischen Bereich (100a) mit wenigstens einem Durchgangsschlitz (102, 103), der jeweils im Wesentlichen L-förmig ist;
- einen zweiten Bereich (100b), welcher eine Fortsetzung des ersten elastischen Bereichs (100a) ist und welcher einen größeren Durchmesser als der erste elastische Bereich (100a) hat, wobei die äußere Oberfläche des zweiten Bereichs (100b) zwei Nuten (104, 105) hat, jeweils zum Aufnehmen eines jeweiligen Halterings (38, 39) zum Halten eines Innengehäuses (16b) eines Lagers (16);
- einen dritten Bereich (100c), welcher eine Fortsetzung des zweiten Bereichs (100b) ist und Mittel für die Montage an eine erste Welle (25) aufnimmt;
und
(B) eine Klemme (101), die sich durch Verformung des ersten elastischen Bereichs (100a) um das Ende einer zweiten Welle (11) festzieht.

2. Buchsen/Klemmen-System (100) nach Anspruch 1, **dadurch gekennzeichnet, dass** jeder Schlitz (102, 103) einen jeweiligen geraden ersten Bereich (102a, 103a) parallel zu einer längs verlaufenden Symmetrieachse (a) der elastischen Buchse (100) umfasst, wobei der jeweilige erste Bereich (102a, 103a) in Reihe mit einem jeweiligen bogenförmigen zweiten Bereich (102b, 103b) vorliegt.

3. Buchsen/Klemmen-System (100) nach Anspruch 2, **dadurch gekennzeichnet, dass** die zwei Schlitze (102, 103) in Bezug zu der Achse (a) gleich und symmetrisch sind.

4. Buchsen/Klemmen-System (100) nach Anspruch 3, **dadurch gekennzeichnet, dass** die zwei Bereiche (102b, 103b) einander diametral gegenüber liegen, und dass die zwei Bereiche (102b, 103b) jeweils ideale Fortsetzungen der zwei Bereiche (102a, 103a) im Uhrzeigersinn (F) sind, um so eine perfekte Ausgewogenheit des Material zu haben.

5. Präzisions-Untersetzungsgetriebe (10), **gekennzeichnet durch** das Vorhandensein wenigstens eines Buchsen/Klemmen-Systems nach einem der Ansprüche 1 bis 4.

6. Untersetzungsgetriebe (10) nach Anspruch 5, **gekennzeichnet durch** die Ausgestaltung als ein Umlauf-Untersetzungsgetriebe.

## Revendications

1. Ensemble douille / collier, comprenant :
(A) une douille (100) qui comprend à son tour :
- une première portion élastique (100a) comprenant au moins une fente de passage (102, 103), qui sont chacune sensiblement en forme de L ;
- une deuxième portion (100b) qui est un prolongement de ladite première portion élastique (100a) et qui est plus large en diamètre que ladite première portion élastique (100a), et la surface extérieure de ladite deuxième portion (100b) comportant deux rainures (104, 105), qui sont prévues chacune pour recevoir une bague de retenue respective (38, 39) pour maintenir une cage intérieure (16b) de roulement (16) ;
- une troisième portion (100c) qui est un prolongement de ladite deuxième portion (100b) et qui abrite des moyens pour le montage d'un premier arbre (25) ;
et
(B) un collier (101) pour serrer par déformation ladite première portion élastique (100a) autour de l'extrémité d'un deuxième arbre (11).

2. Ensemble douille / collier (100) selon la revendication 1, **caractérisé en ce que** chaque fente (102, 103) comprend une première portion droite respective (102a, 103a) qui est parallèle à un axe longitudinal (a) de symétrie de la douille élastique (104), ladite première portion droite respective (102a, 103a) étant montée en série avec une deuxième en forme d'arc respective (102b, 103b).

3. Ensemble douille / collier (100) selon la revendication 2, **caractérisé en ce que** les deux fentes (102, 103) sont équilibrées et symétriques par rapport au dit axe (a).

4. Ensemble douille / collier (100) selon la revendication 3, **caractérisé en ce que** lesdites deux portions (102b, 103b) sont diamétralement opposées, et **en ce que** lesdites deux portions (102b, 103b) sont des prolongements idéaux respectifs desdites deux portions (102a, 103a) dans le sens des aiguilles d'une montre (F), de façon à équilibrer parfaitement le matériau.

5. Engrenage réducteur de précision (10), **caractérisé par le fait qu'**il comprend au moins un ensemble douille / collier selon l'une quelconque des revendications 1 à 4.

6. Engrenage réducteur (10) selon la revendication 5, **caractérisé par le fait qu'**il s'agit d'un engrenage réducteur épicyclique.
